# FASCICULE DE BREVET EUROPEEN

(11) **EP 3 571 545 B1**
(45) Date de publication et mention de la délivrance du brevet: **06.07.2022**
(21) Numéro de dépôt: 18704046.4
(22) Date de dépôt: 16.01.2018
(51) Int. Cl.: G02B 27/14, B23K 26/00

(54) **DISPOSITIF OPTIQUE POUR LE TRAITEMENT PAR LASER DE SURFACES INTERNES D'UNE PIÈCE DE RECOUVREMENT**
OPTISCHE VORRICHTUNG ZUR LASERBEHANDLUNG DER INNENFLÄCHEN EINES ABDECKTEILS
OPTICAL DEVICE FOR LASER TREATMENT OF THE INTERNAL SURFACES OF A COVERING PART

(30) Priorité: 18.01.2017 FR 1750362
(43) Date de publication de la demande: 27.11.2019
(73) Titulaire: Safran, 75015 Paris (FR)
(72) Inventeur: COULAUD, Magali Mélanie, 77550 Moissy-Cramayel (FR); CUVILLIER, Nicolas, 77550 Moissy-Cramayel (FR); DUCOUSSO, Mathieu Loïc, 77550 Moissy-Cramayel (FR)
(74) Mandataire: Brevalex
(86) Numéro de dépôt international: PCT/FR2018/050094
(87) Numéro de publication internationale: WO 2018/134508

(56) Documents cités:
- WO-A1-2016/202710
- FR-A1- 2 970 668

## Description

### DOMAINE TECHNIQUE

La présente invention concerne le domaine de traitement de surfaces internes d'une pièce de recouvrement par laser, et, plus particulièrement, pour le traitement d'une pièce de type bord d'attaque d'une aube d'un moteur d'aéronef.

### ÉTAT DE LA TECHNIQUE ANTÉRIEURE

Les aubes d'un moteur d'aéronef doivent résister à d'importantes contraintes mécaniques tout en satisfaisant des conditions strictes de poids et d'encombrement. Ainsi, pour alléger le poids des aubes on utilise de plus en plus des matériaux composites. Toutefois, les aubes de soufflantes FAN doivent également résister à des impacts des corps étrangers. Il a été alors envisagé de consolider le bord d'attaque des aubes au moyen d'une pièce métallique de renforcement, également appelée bord d'attaque « BA ».

Chaque aube des soufflantes est ainsi composée d'une partie en matériau composite tissé en 3D auquel est collé un bord d'attaque en métal par exemple en alliage de titane. Le collage mis en jeu est structural en ce sens qu'il sert à la tenue mécanique de l'assemblage tout en assurant une reprise d'effort en service. En effet, le collage doit supporter l'éventuel impact d'un corps étranger. Pour réaliser ce genre de collage, le bord d'attaque doit subir au préalable un nettoyage ou traitement de surface spécifique au collage. Ces opérations préparatoires sont actuellement réalisées par voie aqueuse en immergeant le bord d'attaque dans différentes solutions chimiques. Toutefois, ce procédé est long, onéreux et nécessite un respect très strict de normes d'antipollution chimique.

Par ailleurs, on notera que ce genre de pièces métalliques ne peut pas être traité par voie laser. En effet, pour que le traitement par laser soit efficace il faut que le faisceau laser soit dirigé sur la surface à traiter selon une direction d'incidence quasi-normale. Or un bord d'attaque présente une géométrie concave, profonde et étroite ne permettant pas de réaliser un traitement de surface par laser. A titre d'exemple, un bord d'attaque présente une profondeur de quelques centimètres ou même d'une dizaine de centimètres et une ouverture de seulement quelques millimètres. Ainsi, les surfaces internes du bord d'attaque ne peuvent pas être visées par un faisceau laser depuis l'extérieur et selon une direction normale à ces surfaces.

Ainsi, l'objet de la présente invention est de proposer un dispositif optique, remédiant aux inconvénients précités, permettant un traitement par laser efficace, précis, rapide et non polluant. Le document WO 2016/202710 A1 parle d'un dispositif utilisé en médecine, permettant d'observer l'intérieur d'une cavité interne.

### EXPOSÉ DE L'INVENTION

L'invention a pour objet un dispositif optique destiné au traitement par laser de surfaces internes d'une pièce de recouvrement de type bord d'attaque, comportant :
- un collimateur destiné à être connecté à une source laser via une fibre optique pour produire un faisceau-laser ayant un profil spatial d'impulsion plat et collimaté,
- une lentille cylindrique configurée pour focaliser ledit faisceau laser selon une ligne spatiale transversale à la propagation dudit faisceau-laser formant ainsi un faisceau-laser-en-trait,
- un composant optique de réflexion configuré pour pouvoir être introduit à l'intérieur de ladite pièce de recouvrement et pour refléter uniformément ledit faisceau-laser-en-trait sur au moins une surface interne de ladite pièce de recouvrement et selon des directions locales d'incidences quasi-normales à ladite au moins une surface interne.

Ainsi, le dispositif permet de générer une énergie optimale pour le traitement de la surface interne d'une pièce qui peut présenter une configuration géométrique complexe, étroite et profonde et dont les surfaces internes sont inaccessibles directement par un faisceau laser dirigé depuis l'extérieur de la pièce et surtout pas avec une incidence proche de la normale.

Avantageusement, le composant optique comporte un dièdre ayant au moins une surface oblique dotée d'un ensemble de miroirs à échelon, chaque miroir étant configuré pour réfléchir une fraction dudit faisceau-laser-en-trait selon une direction quasi-normale à ladite au moins une surface interne.

Cette configuration d'un ensemble de miroirs à échelon sur une surface inclinée permet de minimiser l'encombrement du composant optique de réflexion permettant ainsi de l'introduire facilement à l'intérieur d'une pièce de recouvrement profonde et étroite. Ceci ne peut pas être réalisé ni avec un seul miroir incliné qui serait très volumineux ni avec un miroir piloté qui serait très épais pour atteindre le fond de la pièce. En outre, les différents miroirs peuvent présenter des inclinaisons variables en adaptation avec la géométrie interne de la pièce permettant ainsi d'adapter de manière locale la focalisation du faisceau laser pour qu'il soit dirigé avec une incidence proche de la normale sur chaque zone de la surface interne de la pièce.

Avantageusement, le dièdre comporte deux surfaces obliques dotées chacune d'un ensemble de miroirs à échelon.

Ceci permet de réfléchir uniformément le faisceau laser sur simultanément deux surfaces internes de la pièce.

Pour une pièce de recouvrement présentant une profondeur prédéterminée et une ouverture prédéterminée, le composant optique présente avantageusement une longueur de l'ordre de la profondeur prédéterminée de ladite pièce et une hauteur maximale inférieure à l'ouverture prédéterminée de ladite pièce.

Ainsi, le faisceau laser peut atteindre la surface interne de la pièce sur toute sa profondeur.

Avantageusement, selon un premier mode de réalisation, les miroirs à échelon sont des miroirs à surfaces planes et inclinés relativement à la surface oblique correspondante du dièdre. Les miroirs cumulent ainsi l'inclinaison de la surface oblique et leurs propres inclinaisons réduisant considérablement l'encombrement du composant optique.

Selon un deuxième mode de réalisation, les miroirs sont disposés sur la surface oblique correspondante du composant optique selon des inclinaisons constantes ou variables et présentent des surfaces identiques ou différentes sélectionnées parmi les surfaces suivantes : planes, concaves et convexes.

Ceci permet d'optimiser l'incidence du faisceau laser sur la surface interne en fonction de la géométrie de la pièce.

Avantageusement, le dispositif optique comporte un châssis configuré pour supporter le composant optique de réflexion, le collimateur et la lentille cylindrique.

Ainsi, le déplacement relatif entre le dispositif optique et la pièce de recouvrement peut être facilité.

Avantageusement, le châssis comporte une bille permettant de faciliter davantage la mobilité relative entre le dispositif optique et la pièce de recouvrement.

L'invention vise également un système de traitement par laser de surfaces internes d'une pièce de recouvrement de type bord d'attaque, comportant le dispositif optique selon l'une quelconque des caractéristiques précédentes, ainsi qu'une source laser et une fibre optique reliant ledit dispositif optique à la source laser.

Avantageusement, le système comporte en outre un générateur de flux d'air destiné à générer un flux d'air à l'intérieur de la pièce de recouvrement lors du traitement des surfaces intérieures par le dispositif optique.

Ceci empêche l'installation des vapeurs issues du traitement de surface sur le dispositif optique.

### BRÈVE DESCRIPTION DES DESSINS

D'autres caractéristiques et avantages de l'invention apparaîtront à la lecture de modes de réalisation préférentiels de l'invention faits en référence aux figures jointes parmi lesquelles :
La Fig. 1 illustre de manière schématique un dispositif optique destiné au traitement par laser de surfaces internes d'une pièce de recouvrement de type bord d'attaque, selon un mode de réalisation de l'invention ;
La Fig. 2A illustre de manière schématique un composant optique de réflexion, selon un premier mode de réalisation préféré de l'invention ;
La Fig. 2B illustre de manière schématique un composant optique de réflexion, selon un deuxième mode de réalisation préféré de l'invention ;
Les Figs. 3A et 3B illustrent de manière schématique un dispositif optique comportant un châssis, selon un mode de réalisation préféré de l'invention ; et
La Fig. 4 illustre de manière schématique un système de traitement par laser de surfaces internes d'une pièce de recouvrement de type bord d'attaque, selon un mode de réalisation préféré de l'invention.

### EXPOSÉ DÉTAILLÉ DE MODES DE RÉALISATION PARTICULIERS

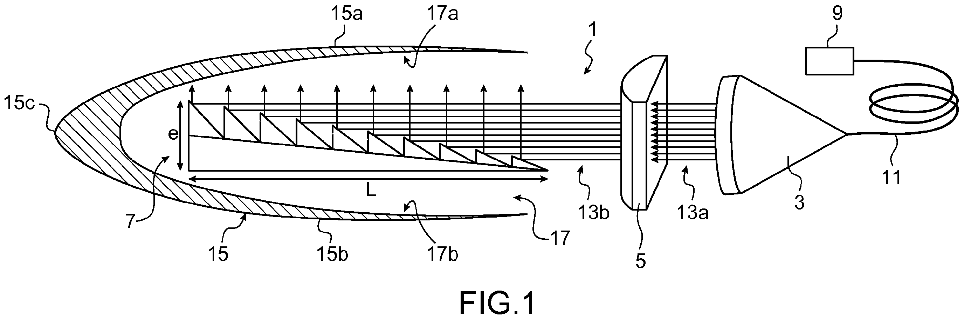

Conformément à l'invention, la Fig. 1 illustre de manière schématique un dispositif optique destiné au traitement par laser de surfaces internes d'une pièce de recouvrement de type bord d'attaque, selon un mode de réalisation de l'invention.

Le dispositif optique 1 comporte un collecteur ou collimateur afocal 3, une lentille cylindrique 5 et un composant optique de réflexion. Ce dispositif 1 est destiné à être connecté à une source laser 9 énergétique par exemple de l'ordre de 100 Watt.

En effet, le collimateur 3 est adapté à être connecté à la source laser 9 via une fibre optique 11 pour produire un faisceau-laser 13a ayant un profil spatial d'impulsion plat et collimaté. Plus particulièrement, le collimateur 3 et/ou la fibre optique 11 sont configurés pour imposer au faisceau laser un profil spatial plat permettant une répartition spatiale homogène de l'énergie du faisceau. En outre, le collimateur 3 est adapté pour élargir spatialement le spot du faisceau laser.

En sortie du collimateur 3, la lentille cylindrique 5 est configurée pour focaliser le faisceau laser collimaté 13a selon une ligne spatiale transversale à la propagation du faisceau laser. Cette focalisation forme un faisceau laser 13b dont le « spot » est en forme de « trait ». Ainsi, dans la suite, le faisceau à la sortie de la lentille cylindrique 5 est appelé « faisceau-laser-en-trait » 13b.

Le composant optique de réflexion 7 est dimensionnellement configuré pour pouvoir être introduit à l'intérieur de la pièce 15 de recouvrement.

En particulier, une pièce de recouvrement de type bord d'attaque 15 est constituée d'une première lèvre 15a et d'une deuxième lèvre 15b raccordées par un bord 15c longitudinal ayant une longueur de quelques centimètres. Le bord d'attaque 15 définit ainsi une cavité 17 formée par les surfaces internes 17a et 17b des première et deuxième lèvres 15a et 15b respectivement. La cavité 17 présente une profondeur de quelques centimètres voire d'une dizaine de centimètres tandis que l'ouverture ou l'écart minimal entre les surfaces internes 17a, 17b des deux lèvres 15a, 15b est seulement de l'ordre de quelques millimètres. Ainsi, le composant optique de réflexion 7 est configuré pour avoir une longueur « L » inférieure à la profondeur prédéterminée du bord d'attaque 15 et une épaisseur ou hauteur maximale « e » inférieure à l'écart minimal prédéterminé entre les surfaces internes 17a, 17b des deux lèvres 15a, 15b. Ainsi, dans l'exemple ci-dessus, le composant optique de réflexion 7 présente une longueur L inférieure à une dizaine de centimètres et une hauteur maximale e inférieure à quelques millimètres.

En outre, le composant optique de réflexion 7 est configuré pour dévier la direction du faisceau-laser-en-trait 13b selon un angle quasi-droit. Plus particulièrement, le composant optique de réflexion 7 est configuré pour refléter uniformément le faisceau-laser-en-trait 13b sur au moins une surface 17a interne de la pièce de recouvrement 15 et selon des directions d'incidences quasi-normales à la ou les surface(s) interne(s). Par quasi-normale, on entend un angle entre le faisceau laser et la normale à la surface proche de zéro, pouvant par exemple être compris entre plus ou moins 15°.

Avantageusement, le composant optique de réflexion 7 comporte un dièdre 71 ayant au moins une surface oblique 71a dotée d'un ensemble de miroirs 73 à échelon, de petite dimension, permettant de minimiser l'encombrement du composant optique de réflexion 7.

Par ailleurs, la longueur L du composant optique de réflexion 7 est avantageusement de l'ordre de la profondeur prédéterminée de la pièce 15 de recouvrement permettant ainsi au faisceau-laser-en-trait 13b d'arroser toute la surface interne de la pièce 15 sur toute sa profondeur.

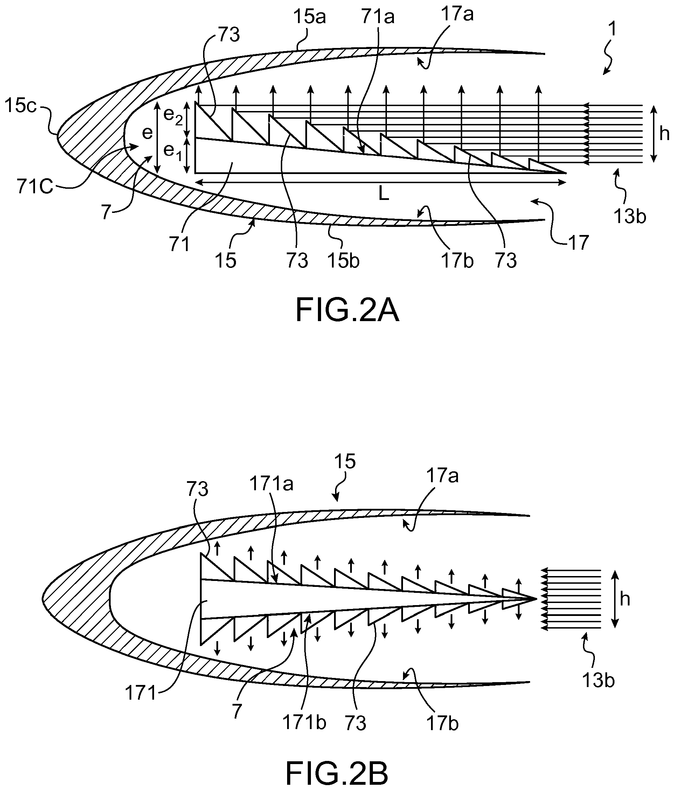

La Fig. 2A illustre de manière schématique un composant optique de réflexion, selon un premier mode de réalisation de l'invention.

Selon ce premier mode de réalisation, le composant optique de réflexion 7 comporte un dièdre 71 ayant une seule surface oblique 71a dotée d'un ensemble de miroirs 73 à échelon. Chaque miroir 73 est configuré pour réfléchir une fraction du faisceau-laser-en-trait 13b selon un angle de réflexion quasi-droit. Ainsi, chaque petit miroir 73 est adapté pour réfléchir la fraction correspondante du faisceau-laser-en-trait 13b selon une direction quasi-normale à la surface interne 17a de la pièce 15 de recouvrement.

Les miroirs 73 à échelon sont par exemple des miroirs plats inclinés relativement à la surface oblique 71a du dièdre 71. Ils cumulent ainsi l'inclinaison de la surface oblique et leurs propres inclinaisons.

On notera que le composant optique de réflexion 7 est destiné à être introduit à l'intérieur de la pièce 15 de recouvrement de manière à ce que sa surface oblique soit disposée au regard d'une surface interne 17a de la pièce 15 et que son côté 17c opposé à l'angle dièdre soit disposé au fond de la cavité 17. Ainsi, chaque miroir 73 reçoit une tranche correspondante du faisceau-laser-en-trait 13b.

Par exemple, pour une pièce 15 de recouvrement présentant une profondeur de 4cm et un écart entre les deux surfaces internes 17a, 17b supérieur à 4mm, il est convenable d'utiliser un composant optique de réflexion 7 présentant une épaisseur maximale e de 4mm. Plus particulièrement, le composant optique de réflexion 7 peut être constitué d'un dièdre 71 ayant un angle dièdre d'environ 3°, une base 71b ayant une longueur *L* de 4cm et un côté 71c opposé à l'angle dièdre ayant une hauteur *e1* d'environ 2mm. En outre, chaque miroir 73 peut présenter une hauteur maximale *e2* de 2mm par rapport à la surface oblique 71a de sorte que la hauteur maximale e du composant optique de réflexion 7 soit égale à 4mm (e = *e1* + *e2*). Par ailleurs, chaque miroir 73 peut présenter une inclinaison d'environ 45° par rapport à la base 71b du dièdre 71, ce qui fait un angle d'environ 42° par rapport à la surface oblique 71a. Dans ce cas, la surface oblique 71a du dièdre 71 sera couverte d'environ une vingtaine de petits miroirs 73 inclinés.

Avantageusement, la hauteur h du trait formé par le faisceau-laser-en-trait 13b est environ égale à la hauteur maximale e du composant optique de réflexion 7. Ainsi, chaque miroir 73 reçoit quasiment la même proportion d'intensité lumineuse du faisceau-laser-en-trait 13b permettant une diffusion homogène et une répartition uniforme du laser sur la surface interne 17a, 17b à traiter.

Selon l'exemple de la Fig. 2A, les miroirs 73 présentent des surfaces planes identiques de mêmes dimensions et sont disposés sur la surface oblique 71a du dièdre 71 selon des angles d'inclinaisons constantes.

On notera que d'autres configurations sont envisageables. En effet, les miroirs 73 peuvent présenter des surfaces différentes et des orientations différentes, de manière à ce que localement le faisceau laser 13b réfléchi par un miroir 73 soit le plus possible normal à la surface interne 17a, 17b de la pièce 15 de recouvrement qui peut avoir une géométrie particulière. De la même manière, les miroirs 73 ne sont pas nécessairement plans et peuvent être des miroirs convergeant ou divergeant définissant une configuration adaptée pour un traitement optimal de la pièce 15 en fonction de sa forme locale.

Ainsi, les miroirs 73 peuvent être disposés sur la surface oblique 71a du dièdre 71 selon des inclinaisons variables en fonction de la géométrie intérieure de la pièce 15 et peuvent présenter des surfaces identiques ou différentes sélectionnées parmi les surfaces suivantes : planes, concaves et convexes.

Une fois qu'une première surface interne 17a de la pièce 15 de recouvrement a été traitée par le dispositif optique 1, la face oblique du composant optique de réflexion peut être mise en face de l'autre surface interne 17b de la pièce 15 pour la traiter. En variante, la pièce 15 de recouvrement peut être elle-même mise dans le sens opposé afin de traiter sa deuxième surface 17b. On notera que le fond 17c de la cavité 17 peut être directement traité par le faisceau laser depuis l'extérieur sans utiliser le composant optique de réflexion 7.

La Fig. 2B illustre de manière schématique un composant optique de réflexion, selon un deuxième mode de réalisation de l'invention.

Selon ce deuxième mode de réalisation, le dièdre 171 comporte deux surfaces obliques 171a et 171b dotées chacune d'un ensemble de miroirs 73 à échelon.

La forme et l'inclinaison des miroirs 73 peuvent être similaires à ceux de l'exemple de la Fig. 2A. Ainsi, chaque ensemble de miroirs à échelon peut comporter des miroirs 73 à surfaces planes et inclinés relativement à la surface oblique 171a, 171b correspondante du dièdre 171.

En variantes, les miroirs 73 peuvent présenter des surfaces identiques ou différentes de formes planes, concaves ou convexes et peuvent être disposés sur les surfaces obliques 171a, 171b du dièdre 171 selon des inclinaisons constantes ou variables.

On notera que selon le deuxième mode de réalisation, l'intensité lumineuse du faisceau-laser-en-trait 13b est réfléchie simultanément depuis les deux surfaces obliques du composant optique de réflexion 7. Ceci permet de traiter les surfaces internes 17a et 17b de la pièce 15 de recouvrement en un seul passage augmentant ainsi la rapidité du traitement. Toutefois, l'énergie du faisceau laser doit être doublée pour avoir la même efficacité de traitement que celle du premier mode de réalisation de la Fig. 2A.

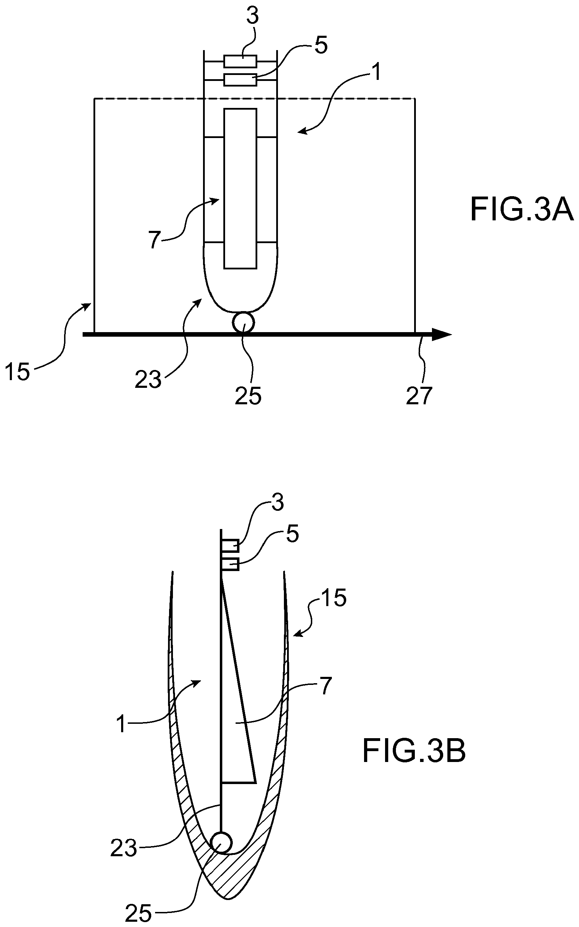

Les Figs. 3A et 3B illustrent de manière schématique un dispositif optique comportant un châssis, selon un mode de réalisation préféré de l'invention. La Fig. 3A est une vue de face tandis que la Fig. 3B est une vue de profil du dispositif optique.

En effet, le dispositif optique 1 comporte un châssis 23 par exemple en forme d'un arceau en U configuré pour assembler et supporter le collimateur 3, la lentille cylindrique 5 ainsi que le composant optique de réflexion 7 selon l'un quelconque des modes de réalisation des Fig. 2A et 2B.

Avantageusement, le châssis 23 comporte une bille 25 permettant de faire rouler le dispositif 1 au fond 17c de la gorge d'une pièce de type bord d'attaque 15. En effet, le fond du bord d'attaque 15 définit un guide facilitant le roulement de la bille 25 du dispositif optique 1 dans le sens de l'axe 27 de la gorge afin de traiter les surfaces internes 17a, 17b sur toutes leurs largeurs.

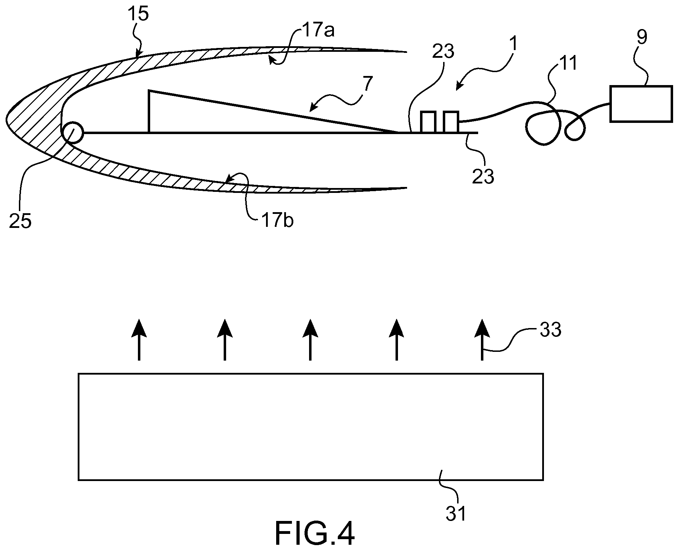

La Fig. 4 illustre de manière schématique un système de traitement par laser de surfaces internes d'une pièce de recouvrement de type bord d'attaque, selon un mode de réalisation préféré de l'invention.

Le système de traitement comporte une source laser 9 et une fibre optique 11 reliant la source laser 9 au dispositif optique 1 selon l'un quelconque des modes de réalisations ci-dessus.

Avantageusement, le système de traitement comporte en outre un générateur 31 de flux d'air destiné à générer un flux d'air 33 à l'intérieur de la pièce 15 de recouvrement lors du traitement des surfaces internes 17a, 17b par le dispositif optique 1.

En effet, durant le traitement des surfaces internes 17a, 17b, l'interaction laser-matière peut éjecter des vapeurs que le flux d'air 33 empêche de se déposer sur les différents éléments du dispositif optique 1.

Avantageusement, le générateur 31 est configuré pour générer un flux d'air 33 laminaire et dont le flux est fonction de la quantité de vapeur générée et de la distance entre la zone d'interaction laser-matière et le composant optique de réflexion 7 permettant ainsi de préserver le dispositif optique 1 d'une éventuelle dégradation.

## Revendications

1. Dispositif optique adapté au traitement par laser de surfaces internes d'une pièce de recouvrement (15) de type bord d'attaque d'une aube d'un moteur d'aéronef, comportant :
- un collimateur (3) destiné à être connecté à une source laser (9) via une fibre optique (11) pour produire un faisceau laser (13a) ayant un profil spatial d'impulsion plat et collimaté,
- une lentille cylindrique (5) configurée pour focaliser ledit faisceau laser (13a) selon une ligne spatiale transversale à la propagation dudit faisceau laser formant ainsi un faisceau-laser-en-trait (13b),
- un composant optique de réflexion (7) configuré pour pouvoir être introduit à l'intérieur de ladite pièce (15) de recouvrement et pour refléter uniformément ledit faisceau-laser-en-trait (13b) sur au moins une surface interne (17a, 17b) de ladite pièce (15) de recouvrement, le composant optique de réflexion (7) comportant un dièdre (71) ayant au moins une surface oblique (71a) dotée d'un ensemble de miroirs (73) à échelon, chaque miroir étant configuré pour réfléchir une fraction dudit faisceau-laser-en-trait (13b) selon une direction quasi-normale à ladite au moins une surface interne (17a, 17b).

2. Dispositif selon la revendication 1, **caractérisé en ce que** le dièdre (171) comporte deux surfaces obliques (171a, 171b) dotées chacune d'un ensemble de miroirs (73) à échelon.

3. Dispositif selon l'une quelconque des revendications précédentes, **caractérisé en ce que** ladite pièce (15) de recouvrement présente une profondeur prédéterminée et une ouverture prédéterminée et **en ce que** le composant optique de réflexion(7) présente une longueur inférieure à une dizaine de centimètres et une hauteur maximale inférieure à quelques millimètres.

4. Dispositif selon l'une quelconque des revendications précédentes, **caractérisé en ce que** les miroirs (73) à échelon sont des miroirs à surfaces planes et inclinés relativement à la surface oblique correspondante du dièdre.

5. Dispositif selon l'une quelconque des revendications 1 à 3, **caractérisé en ce que** les miroirs (73) sont disposés sur la surface oblique correspondante du composant optique de réflexion (7) selon des inclinaisons constantes ou variables et présentent des surfaces identiques ou différentes sélectionnées parmi les surfaces suivantes : planes, concaves et convexes.

6. Dispositif selon l'une quelconque des revendications précédentes, **caractérisé en ce qu'**il comporte un châssis (23) configuré pour supporter le composant optique de réflexion (7), le collimateur (3) et la lentille cylindrique (5).

7. Dispositif selon la revendication 6, **caractérisé en ce que** le châssis comporte une bille (25).

8. Système de traitement par laser de surfaces internes d'une pièce de recouvrement de type bord d'attaque, comportant le dispositif optique (1) selon l'une quelconque des revendications précédentes, **caractérisé en ce qu'**il comporte en outre une source laser (9) et une fibre optique (11) reliant ledit dispositif optique à la source laser.

9. Système selon la revendication 8, **caractérisé en ce qu'**il comporte un générateur (31) de flux d'air destiné à générer un flux d'air à l'intérieur de la pièce (15) de recouvrement lors du traitement des surfaces intérieures (17a, 17b) de la pièce (15) de recouvrement par le dispositif optique (1).

## Patentansprüche

1. Optische Vorrichtung, die für die Laserbearbeitung von Innenflächen eines Abdeckteils (15) vom Typ Vorderkante einer Schaufel eines Luftfahrzeugmotors geeignet ist, enthaltend:
- einen Kollimator (3), der dazu bestimmt ist, über eine optische Faser (11) mit einer Laserquelle (9) verbunden zu werden, um einen Laserstrahl (13a) mit einem flachen und kollimierten räumlichen Impulsprofil zu erzeugen,
- eine zylindrische Linse (5), die dazu ausgelegt ist, den Laserstrahl (13a) entlang einer räumlichen Linie zu fokussieren, die quer zur Ausbreitung des Laserstrahls verläuft, wodurch ein strichförmiger Laserstrahl (13b) gebildet wird,
- eine reflektierende optische Komponente (7), die dazu ausgelegt ist, in das Innere des Abdeckteils (15) eingeführt werden zu können und den strichförmigen Laserstrahl (13b) an zumindest einer Innenfläche (17a, 17b) des Abdeckteils (15) gleichmäßig zu reflektieren, wobei die reflektierende optische Komponente (7) einen Dieder (71) mit zumindest einer schrägen Fläche (71a) umfasst, die mit einem Satz von Stufenspiegeln (73) versehen ist, wobei jeder Spiegel dazu ausgelegt ist, einen Anteil des strichförmigen Laserstrahls (13b) in einer Richtung quasi senkrecht zu der zumindest einen Innenfläche (17a, 17b) zu reflektieren.

2. Vorrichtung nach Anspruch 1, **dadurch gekennzeichnet, dass** der Dieder (171) zwei schräge Flächen (171a, 171b) aufweist, die jeweils mit einem Satz von Stufenspiegeln (73) versehen sind.

3. Vorrichtung nach einem der vorhergehenden Ansprüche, **dadurch gekennzeichnet, dass** das Abdeckteil (15) eine vorbestimmte Tiefe und eine vorbestimmte Öffnung aufweist und dass die reflektierende optische Komponente (7) eine Länge von weniger als etwa zehn Zentimetern und eine maximale Höhe von weniger als einigen Millimetern aufweist.

4. Vorrichtung nach einem der vorhergehenden Ansprüche, **dadurch gekennzeichnet, dass** die Stufenspiegel (73) Spiegel mit ebenen Oberflächen sind und relativ zur entsprechenden schrägen Fläche des Dieders geneigt verlaufen.

5. Vorrichtung nach einem der Ansprüche 1 bis 3, **dadurch gekennzeichnet, dass** die Spiegel (73) mit konstanten oder variablen Neigungen auf der entsprechenden schrägen Fläche der reflektierenden optischen Komponente (7) angeordnet sind und gleiche oder unterschiedliche Flächen, ausgewählt aus ebenen, konkaven und konvexen Flächen, aufweisen.

6. Vorrichtung nach einem der vorhergehenden Ansprüche, **dadurch gekennzeichnet, dass** sie einen Rahmen (23) aufweist, der dazu ausgelegt ist, die reflektierende optische Komponente (7), den Kollimator (3) und die zylindrische Linse (5) abzustützen.

7. Vorrichtung nach Anspruch 6, **dadurch gekennzeichnet, dass** der Rahmen eine Kugel (25) aufweist.

8. System zur Laserbearbeitung von Innenflächen eines Abdeckteils vom Typ Vorderkante, enthaltend die optische Vorrichtung (1) nach einem der vorhergehenden Ansprüche, **dadurch gekennzeichnet, dass** es ferner eine Laserquelle (9) und eine optische Faser (11) aufweist, die die optische Vorrichtung mit der Laserquelle verbindet.

9. System nach Anspruch 8, **dadurch gekennzeichnet, dass** es einen Luftstromgenerator (31) zum Erzeugen eines Luftstroms im Inneren des Abdeckteils (15) während der Bearbeitung der Innenflächen (17a, 17b) des Abdeckteils (15) mittels der optischen Vorrichtung (1) aufweist.

## Claims

1. Optical device suitable for the laser treatment of the internal surfaces of a leading edge-type covering part (15) of an aircraft engine blade, comprising:
- a collimator (3) intended to be connected to a laser source (9) via an optical fibre (11) in order to produce a laser beam (13a) having a collimated and flat spatial pulse profile,
- a cylindrical lens (5) configured to focus said laser beam (13a) along a spatial line that is transverse to the propagation of said laser beam, thus forming a line laser beam (13b),
- an optical reflection component (7) configured so as to be capable of being inserted into said covering part (15) and to uniformly reflect said line laser beam (13b) onto at least one internal surface (17a, 17b) of said covering part (15), the optical reflection component (7) having a dihedron (71) with at least one oblique surface (71a) equipped with a stepped-mirror assembly (73), each mirror being configured so as to reflect a fraction of said line laser beam (13b) according to a direction quasi-normal to said at least one internal surface (17a, 17b).

2. Device according to claim 1, **characterized in that** the dihedron (171) has two oblique surfaces (171a, 171b) each equipped with a stepped mirror assembly (73).

3. Device according to any one of the previous claims, **characterized in that** said covering part (15) has a predetermined depth and a predetermined opening and **in that** the optical reflection component (7) has a length of less than around ten centimetres and a maximum height of less than several millimetres.

4. Device according to any one of the previous claims, **characterized in that** the stepped mirrors (73) are mirrors with flat surfaces inclined with respect to the corresponding oblique surface of the dihedron.

5. Device according to any one of claims 1 to 3, **characterized in that** the mirrors (73) are arranged on the corresponding oblique surface of the optical reflection component (7) according to constant or variable inclinations and have identical or different surfaces selected from the following surfaces: flat, concave and convex.

6. Device according to any one of the previous claims, **characterized in that** it includes a frame (23) configured to support the optical reflection component (7), the collimator (3) and the cylindrical lens (5).

7. Device according to claim 6, **characterized in that** the frame includes a ball (25).

8. System for laser treatment of internal surfaces of a leading edge-type covering part, comprising the optical device (1) according to any one of the previous claims, **characterized in that** it also comprises a laser source (9) and an optical fibre (11) connecting said optical device to the laser source.

9. System according to claim 8, **characterized in that** it comprises an air flow generator (31) intended to generate an air flow inside the covering part (15) during the treatment of the interior surfaces (17a, 17b) of the covering part (15) by the optical device (1).
